Europäisches Patentamt

European Patent Office

Office européen des brevets

(19)

(11) Veröffentlichungsnummer: **0 324 878**

**A1**

(12) **EUROPÄISCHE PATENTANMELDUNG**

(21) Anmeldenummer: 88100809.8

(22) Anmeldetag: 20.01.88

(51) Int. Cl.⁴: **B60K 41/06**

(43) Veröffentlichungstag der Anmeldung:
26.07.89 Patentblatt 89/30

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sandor, Dr. Dipl.-Ing.**
**Petöfi u. 59**

H-3102 Salgotarjan Baglyasalja(HU)
Erfinder: **Töröcsik, Laszlo, Dipl.-Ing.**
**Kakukk u. 10/b**
**H-1126 Budapest XII(HU)**
Erfinder: **Valoczi, György, Dipl.-Ing.**
**Budapesti u. 40**
**H-3104 Salgotarjan(HU)**

(74) Vertreter: **Patentanwälte Viering & Jentschura**
**Steinsdorfstrasse 6**
**D-8000 München 22(DE)**

(54) **Verfahren und Einrichtung zum sicherheitsvollen Anfahren und energiesparenden Parken von mit elektrohydraulisch gesteuertem hydromechanischen automatischen Wechselgetriebe ausgestatteten Strassenkraftfahrzeugen.**

(57) Verfahren und Einrichtung zum sicherheitsvollen Anfahren und energiesparenden Parken von mit elektrohydraulisch gesteuertem hydromechanischen automatischen Wechselgetriebe ausgestatteten Straßenkraftfahrzeugen. Die Erfindung bezieht sich auf ein Verfahren und eine Einrichtung zum sicherheitsvollen Anfahren von Kraftfahrzeugen, die eine aus einem verbrennungsmotor (1), einem elektohydraulisch gesteuerten hydromechanischen automatischen Wechselgetriebe (2), einem Differentialwerk (4), mindestens einem Paar Halbwellen (5) und einem Paar Räder (6), gegebenenfalls auch einer das automatische Wechselgetriebe (2) mit dem Differentialwerk (4) verbindenden Kardanwell (3) bestehende Antriebskette, ein den Motor (1) mit Kraftstoff versorgendes Kraftstoffzuführsystem und ein dieses regelndes Gaspedal (10) sowie einen die Gangstufenschaltungsvarianten des automatischen Wechselgetriebes (2) auswählenden Gangwählschalter (13) aufweisen. Gemäß der Erfindung werden mit Hilfe eines Radwinkelgeschwindigkeitssignalgebers (12) aus der Winkelgeschwindigkeit irgendeines Konstruktionsteils oder Teilpaars des mit der Antriebswelle des automatischen Wechselgetriebes (2) beginnenden und mit dem Rad (6) endenden Teils der Antriebskette bei einer Raddrehzahl von Null oder praktisch Null, mit Hilfe eines Motorwinkelgeschwindigkeitssignalgebers (9) aus der Winkelgeschwindigkeit der Hauptwelle des Motors (1) bei Leerlaufdrehzahl, und mit Hilfe eines Gaspedalgrundstellungssignalgebers (11) aus der Stellung des Gaspedals (10) bei dessen Grundstellung je ein elektrisches Signal gebildet und aus der gemeinsamen Anwesenheit dieser Signale in einer Steuereinheit (8) ein Freigabesignal und mit Hilfe des Gangwählschalters (13) ein das Vorwärts- oder Rückwärtsgangschalten des automatischen Wechselgetriebes (2) steuerndes Steuersignal abgeleitet, wonach bei gemeinsamer Anwesenheit des Steuersignals und des Freigabesignals durch Bewegen des Gaspedals (10) aus dessen Grundstellung ein Befehlssignal erzeugt wird, und aus dem gemeinsamen Vorliegen des Freigabesignals, des Steuersignals und des Befehlssignals ein Schaltsignal abgeleitet wird, mit dem die die gewünschte Gangstufe des automatischen Wechselgetriebes (2) schaltenden elektromagnetischen Ventile (7) in die Schaltlage gesteuert werden.

Fig 1

## Verfahren und Einrichtung zum sicherheitsvollen Anfahren und energiesparenden Parken von mit elektrohydraulisch gesteuertem hydromechanischen automatischen Wechselgetriebe ausgestatteten Straßenkraftfahrzeugen

Die Erfindung bezieht sich auf eine Verfahren und eine Einrichtung, mit denen verhindert werden kann, daß ein mit elektohydraulisch gesteuertem hydromechanischen automatischen Wechselgetriebe ausgestattetes Straßenkraftfahrzeug angefahren wird, noch bevor die Sicherheitsbedingungen des Anfahrens erfüllt sind, bzw. mit denen ein minimaler Kraftstoffverbrauch gewährleistet werden kann, wenn das Kraftfahrzeug mit laufendem Motor parken soll.

Bei einem Teil der mit einem automatischen Wechselgetriebe ausgestatteten Kraftfahrzeuge genügt es, zum Schalten des Wechselgetriebes in die Gangstufen den Wählschalter in die entsprechende Lage zu bringen, unabhängig vom tatsächlichen Bewegungszustand des Kraftfahrzeugs und von der Motordrehzahl. Dies ist unfallgefährlich. Wenn der Fahrzeugfahrer beim Anfahren das Kraftfahrzeug einbremst, kann damit ein Unfall vermieden werden und gleichzeitig kann auch das Schleppmoment des Hydrodynamischen Drehmomentwandlers überwunden werden. Dies ist aber mit einem Energieverlust verbunden.

Dieses Problem wurde bereits derart gelöst, daß der die Kupplungen der Anfahrstufen (I. Rückwärtsgang) des automatischen Wechselgetriebes betätigende Hydraulikraum mit dem Rückflußzweig des Systems mittels je einer gesonderten Leitung unmittelbar verbunden ist und in dieser Leitung ein elektromagnetisches Ventil eingebaut ist. Eine derartige Anordung ist zum Beispiel in der GB-B-2 126 291 beschrieben. Das oben erwähnte elektromagnetische Ventil schließt nur, wenn die Bedingungen des sicherheitsvollen Anfahrens erfüllt sind. Diese Lösung hat den Nachteil, daß praktisch ein zweites Betätigungs- und Steuersystem für die Anfahrstufen ausgebildet sein müssen.

Eine Zielsetzung der Erfindung ist es, ein Steuersystem des automatischen Wechselgetriebes zu schaffen und derart zu gestalten, daß es in sich fähig ist, das Anfahren zu verhindern, wenn die Bedingungen dazu nicht bestehen. Ein zweites Steuersystem soll daher nicht verwendet werden. Dies kann erfindungsgemäß dadurch erreicht werden, daß bereits das Befehlsignal der die Anfahrstufen schaltenden elektromagnetischen Ventile entsprechen derjenigend Parameter beeinflußt wird, die einen den Bedingungen des sicherheitsvollen Anfahrens genügenden Zustand repräsentieren.

Eine weitere Zielsetzung der Erfindung ist es, daß das parkende Kraftfahrzeug einen minimalen Kraftstoffverbrauch hat. Dies kann dadurch verwirklicht werden, daß das automatische Wechselgetriebe bei Standgas und bei ziemlich langsamer bremsender Bewegung des Fahrzeugs automatisch in den "Leergang" geschaltet wird.

Die Erfindung ist also ein Verfahren zum sicherheitsvollen Anfahren eines Kraftfahrzeugs, welches eine aus einem Verbrennungsmotor, einem elektohydraulisch gesteuerten hydromechanischen automatischen Wechselgetriebe, einem Differentialwerk, mindestens einem Paar Halbwellen und einem Paar Räder, gegebenenfalls einer das automatische Wechselgetriebe mit dem Differentialwerk verbindenden Kardanwelle bestehende Antriebskette aufweist und weiterhin mit einem den Motor mit Kraftstoff versorgenden Kraftstoffzuführsystem und einem dieses regelnden Gaspedal und einem die Gangstufenschaltvarianten des automatischen Wechselgetriebes auswählenden Gangwählschalter ausgestattet ist. Das Verfahren ist derart geführt, daß aus der Winkelgeschwindigkeit irgendeines Konstruktionsteils oder Teilpaares des mit der Antriebswelle des automatischen Wechselgetriebes beginnenden und mit dem Rad endenden Teils der Antriebskette mit Hilfe eines Winkelgeschwindigkeitssignalgebers eines Rades bei einer Drehzahl desselben, die Null oder praktisch Null beträgt, weiterhin mit Hilfe eines Winkelgeschwindigkeitssignalgebers des Motors aus der Winkelgeschwindigkeit der Hauptwelle des Motors bei Leerlaufdrehzahl und mit Hilfe eines Gaspedalstellungssignalgebers aus der Gaspedalstellung in der Grundstellung des Gaspedals je ein elektrisches Signal erzeugt werden, bei deren gemeinsamen Anwesenheit ein Freigabesignal in einer Steuereinheit und mit dem Gangwählschalter ein die Vorwärts-oder Rückwärtsgangschaltung des automatischen Wechselgetriebes steuerndes Signal erzeugt werden, dann bei gemeinsamer Anwesenheit des Steuersignals und des Freigabesignals ein Befehlssignal durch Bewegen des Gaspedals aus der Grundstellung erzeugt wird und durch gemeinsames Vorliegen des Freigabesignals, des Steuersignals und des Befehlssignals ein Schaltsignal erzeugt wird, mit dem die die gewünschte Gangstufe des automatischen Wechselgetriebes schaltenden elektohydraulischen Ventile in ihre Schaltlage gesteuert werden.

Bei einer bevorzugten Verwirklichungsart des erfindungsgemäßen Verfahrens wird mit dem Winkelgeschwindigkeitssignalgeber des Rades ein auch für die jeweilige Bewegungsrichtung des Kraftfahrzeuges charakteristisches Signal erzeugt, durch dessen Verwendung die Bewegungsrichtung des Kraftfahrzeuges mit der von dem Steuersignal, das mittels des Gangwählschalters erzeugt wird, angebenden vorgewählten Anfahrrichtung in der Steuereinheit verglichen wird, und daß durch die Übereinstimmung dieser Richtungen das die Raddrehzahl Null oder praktisch Null repräsentierende Signal des Radwinkelgeschwindigkeitssignalgebers ersetzt wird.

Bei einer weiteren bevorzugten Verwirklichungsart des erfindungsgemäßen Verfahrens wird das Schaltsignal durch gemeinsames Vorliegen des in der Gaspedalgrundstellung erzeugten Signals des Gaspedalstellungssignalgebers und des die bremsende Bewegung des Kraftfahrzeugs unterhalb eines bestimmten niedrigen Geschwindigkeitswertes repräsentierenden Signals verboten und alle Stufen des automatischen Wechselgetriebes ausgeschaltet (in den Leergang gesetzt), wonach gegebenenfalls das Verbot des Schaltsignals durch Bewegen des Gaspedals aus der Grundstellung aufgehoben und die die gewünschte Gangstufe des automatischen Wechselgetriebes schaltenden elektohydraulischen Ventile mittels des Schaltsignals in ihre Schaltlage gesteuert werden.

Die Erfindung bezieht sich auch auf eine Einrichtung zum sicherheitsvollen Anfahren solcher Kraftfahrzeuge, die eine aus einem Verbrennungsmotor, einem elektrohydraulisch gesteuerten hydromechanischen automatischen Wechselgetriebe, einem Differentialwerk, mindestens einem Paar Halbwellen und einem Paar Räder, gegebenenfalls auch einer das automatische Wechselgetriebe mit dem Differentialwerk verbindenden Kardanwelle bestehende Antriebskette, ein den Motor mit Kraftstoff versorgendes Kraftstoffzuführsystem und ein diese regelndes Gaspedal sowie einen die Gangstufenschaltungsvarianten des automatischen Wechselgetriebes auswählenden Gangwählschalter aufweisen. Gemäß der Erfindung sind irgendein Konstruktionsteil oder Teilpaar des mit der Antriebswelle des automatischen Wechselgetriebes beginnenden und mit dem Rad endenden Teils der Antriebskette mit einem Radwinkelgeschwindigkeitssignalgeber, die Hauptwelle des Motors oder ein mit der Hauptwelle in konstanter Übersetzungsverbindung stehendes Bauteil mit einem Motorwinkelgeschwindigkeitssignalgeber, und das Gaspedal mit einem Gaspedalgrundstellungssignalgeber gekoppelt und der Radwinkelgeschwindigkeitssignalgeber, der Motorwinkelgeschwindigkeitssignalgeber, der Gaspedalstellungssignalgeber sowie die Klemmen des Gangwählers an die Eingänge einer Steuereinheit angeschlossen, wobei die Steuereinheit eine die Signale des Radwinkelgeschwindigkeitssignalgebers, des Motorwinkelgeschwindigkeitssignalgebers und des Gaspedalstellungssignalgebers bewertende und ein Freigabesignal erzeugende Einheit und eine das Freigabesignal, das Steuersignal des Gangwählschalters und das Befehlssignal des Gaspedalstellungssignalgebers bewertende und das Schaltsignal erzeugende Einheit aufweist und an die Ausgänge der Steuereinheit die Elektromagnete der elektromagnetischen Ventile des automatischen Wechselgetriebes angeschlossen sind.

Bei einer bevorzugten Ausführungsform der erfindungsgemäßen Einrichtung weist der Radwinkelgeschwindigkeitssignalgeber wenigstens einen die Bewegungsrichtung des Kraftfahrzeuges wahrnehmenden Richtungsfühler auf, der an einen Eingang der Steuereinheit angeschlossen ist, und die Steuereinheit weist eine die Signale des Richtungsfühlers und des Gangwählschalters auswertende, den Bewegungszustand des Fahrzeugs bewertende Einheit auf, deren Ausgang parallel zu dem Radgeschwindigkeitssignalgeber an die das Freigabesignal erzeugende Einheit angeschlossen ist.

Bei einer weiteren bevorzugten Ausführungsform der erfindungsgemäßen Einrichtung sind der Radwinkelgeschwindigkeitssignalgeber und der Motorwinkelgeschwindigkeitssignalgeber jeweils ein Frequenzgeber, der an der Steuerwelle des Motors bzw. an der Antriebswelle des automatischen Wechselgetriebes angeschlossen ist.

Die Erfindung wird nachstehend anhand zweier Ausführungsbeispiele mit Hilfe der Zeichnungen näher erläutert. Es zeigen:

Fig. 1 die Antriebskette eines Kraftfahrzeugs und die Schaltung der Signalgeber und der Steuereinheit in schematischer Darstellung,

Fig. 2 die Schaltungsanordnung einer Ausführungsform der erfindungsgemäßen Einrichtung und

Fig. 3 einen Teil der Schaltungsanordnung einer anderen Ausführungsform der erfindungsgemäßen Einrichtung.

Die erfindungsgemäße Lösung wurde zur Steuerung des automatischen Wechselgetriebes eines städtischen Autobusses verwirklicht.

Die Kraftquelle des Autobusses ist ein Motor 1 - in diesem Fall ein Sechszylinder-Dieselmotor -, der ein elektohydraulisch gesteuertes hydromechanisches automatisches Wechselgetriebe 2 antreibt. Das automatische Wechselgetriebe 2 hat drei Vorwärts- und eine Rückwärtsgangstufe.

Die Ausgangswelle des automatischen Wechselgetriebes 2 ist mittels einer Kardanwelle 3 mit einem Differentialwerk verbunden, welches über Halbwellen 5 mit Rädern 6 verbunden ist. Hier soll bemerkt werden, daß die erfindungsgemäße Lösung auch bei Personenkraftwagen verwendet werden kann, und wie bekannt, sind das Differentialwerk und das Wechselgetriebe bei den Frontantriebs- und Heckmotorpersonenkraftwagen in einem Block gebaut, so daß hier eine Kardanwelle fehlt.

Das Schalten der Stufen des automatischen Wechselgetriebes 2 wird über elektomagnetische Ventile 7 eines elektrohydraulischen Ventilsystems gesteuert. Die Elektromagnete der elektromagnetischen Ventile 7 sind an den Eingang einer Steuereinheit 8 angeschlossen.

Die zur Durchführung des erfindungsgemäßen Verfahrens erforderlichen Grundinformationen werden von Signalgebern geliefert.

An die Steuerwelle des Motors 1 ist ein Motordrehzahlsignalgeber 9 angebaut. Es ist offensichtlich, daß die Drehzahl der Steuerwelle als Winkelgeschwindigkeitssignal gut verwendbar ist, weil zwischen der Steuerwelle und der Hauptwelle des Motors eine konstante Übersetzung von 2:1 besteht.

Am Ausgang des automatischen Wechselgetriebes ist ein Radwinkelgeschwindigkeitssignalgeber 12 eingebaut. Hier wurde derjenige Ausgang des automatischen Wechselgetriebes 2 verwendet, der gleichzeitig auch das für den Geschwindigkeitsmesser des Kraftfahrzeuges erforderliche Signal erzeugt.

Das Übersetzungsverhältnis zwischen der an den oben erwähnten Meßstellen gemessenen Winkelgeschwindigkeit und der tatsächlich zu bewertenden Winkelgeschwindigkeit wird in der Steuereinheit 8 berücksichtigt.

Am Gaspedal 10 ist ein Gaspedalstellungssignalgeber 11 eingebaut. Dieser kann in Abhängigkeit von der allgemeinen Steuerungsart des Kraftfahrzeuges unterschiedlich ausgebilden werden. In einfachem Fall ist er ein Zweiwegeschaler, aber bei Verwendung eines auf die Betätigung des Gaspedals ansprechenden elektronischen Ferngebers kann auch das von diesem erzeugte Signal verwendet werden.

Schließlich ist auch der Gangwählschalter 13 (Kontroller) eine Signalquelle, mit dem die verschiedenen Gangstufenschaltvarianten ausgewählt werden können. In Abhängigkeit von der Entwicklungsstufe der Steuerung des automatischen Wechselgetriebes kann das dem Fahrzeugfahrer überlassene Wählen der Gänge unterschiedlich sein. Bei dem dargestellten Beispiel besteht auch die Möglichkeit des selbständigen Verbots der gegenüber der I. Stufe höheren Stufen und der gegenüber der II. Stufe höheren Stufe. Der Gangwählschalter 13, der vielartig ausgebildet werden kann (mit einem Hebel, einem Druckknopf usw.) soll also über die zum Zustandebringen mindestens der I., der II., der D-(automatisches Aufwärtsschalten bis zur höchsten "direkten" Stufe), der R-(Rückwärtsgang) und der N-(Leerlauf) Schaltungsstufe erforderlichen Klemmen I., II., D, R, N verfügen.

Die oben beschriebenen Signalquellen sind an den Eingängen der Steuereinheit 8, das heißt der Motorwinkelgeschwindigkeitssignalgeber 9 am Eingang 16, der Gaspedalstellungssignalgeber 11 am Ein-

Eingang 17, der Radwinkelgeschwindigkeitssignalgeber 12 am Eingang 18, die Klemme I. des Gangwählschalters 13 am Einang 19, die Klemme II. am Eingang 30, die Klemme D am Eingang 21 und die Klemme R am Eingang 22 angeschlossen (die Klemme N spielt aus dem Gesichtspunkt der Erfindung keine Rolle).

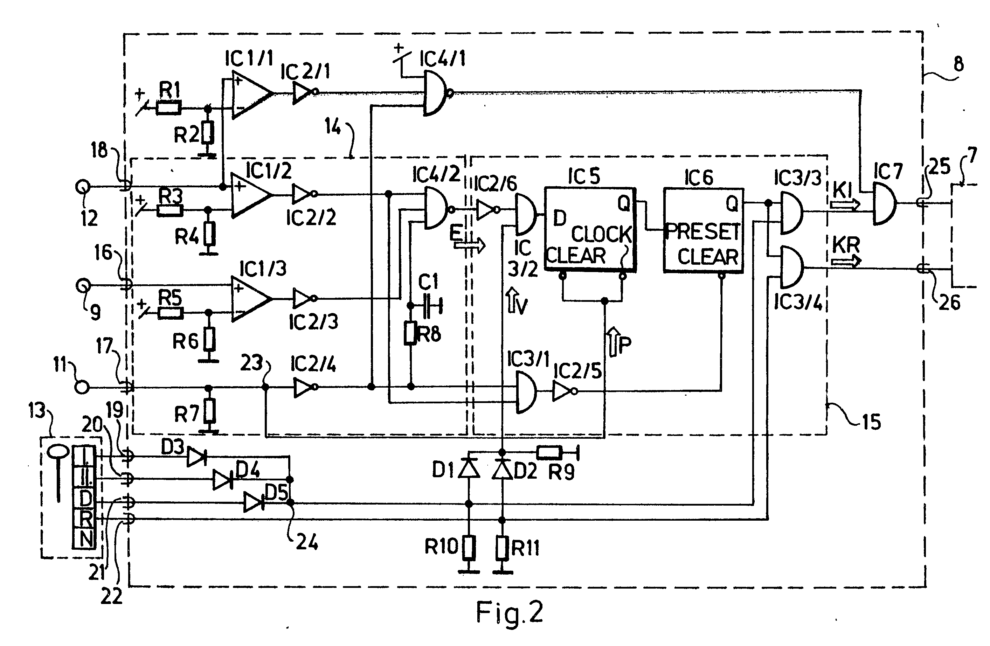

In Figur 2 ist eine mögliche Gestaltung der Steuereinheit 8 dargestellt, welche aus den folgenden elektronischen Elementen besteht: dem die Operationsverstärker IC1/1 - IC1/3 enthaltenden Vierfachoperationsverstärker LM 324, dem die Negatoreinheit IC2/1 - IC2/6 enthaltenden Sechsnegator SN 74 LS 04, dem die Operationsverstärker IC3/1 - IC3/4 enthaltenden UND-Tor SN 74 LS 38 mit zwei Eingängen, dem die Operationsverstärker IC4/1 - IC4/2 enthaltenden NAND-Tor SN 74 LS 10 mit zweimal drei Eingängen, den Flip-Flops IC 5 und IC6 vom Typ SN 74 LS 74 D, schließlich noch dem UND-Tor SN 74 LS 38 mit zwei Eingängen, dessen einziger Operationsverstärker IC7 ausgenützt wurde. Weiterhin wurden Dioden D1-D5 in 41148 und Widerstände R1-R11 verwendet (Die Bezeichnungen entsprechen dem vom Technischen Verlag ausgegebenen IC-Katalog). Die der Erfindung entsprechende Schaltung kann auch aus zahlreich anderen elektronischen Elementen aufgebaut werden.

Die Steuereinheit 8 ist aus den oben beschriebenen Elementen wie folgt aufgebaut.

Zum Empfangen des Signals des Motorwinkelgeschwindigkeitssignalgebers 9 ist der Eingang 16 an einen Eingang des Operationsverstärkers IC1/3 angeschlossen, wobei dessen anderer Eingang mittels eines aus Widerständen R5-R6 bestehenden Spannungsteilers am positiven Pol der Speisespannungsquelle angeschlossen ist.

Der Ausgang des Operationsverstärkers IC1/3 ist über die Negatoreinheit IC2/3 an einen Eingang des Operationsverstärkers IC4/2 angeschlossen.

Der das Signal des Radwinkelgeschwindigkeitssignalgebers 12 empfangende Eingang 18 ist an einen Eingang des Operationsverstärkers IC1/2 angeschlossen, dessen anderer Eingang mittels des aus Widerständen R3-R4 bestehenden Spannungsteilers am positiven Pol der Speisespannungsquelle, und dessen Ausgang über die Negatoreinheit IC2/2 am zweiten Eingang des Operationsverstärkers IC4/2 angeschlossen sind.

Der mit dem Anschluß des Gaspedalstellungssignalgebers 11 besetzte Eingang 17 ist über einen Widerstand R7 an Masse sowie über den Verzweigungspunkt 23, die Negatoreinheit IC2/4 und den Widerstand R8 am dritten Eingang des Operationsverstärkers IC4/2 angeschlossen. Zwischen dem gemeinsamen Punkt des Widerstandes R8 und des Operationsverstärkers IC4/2 und Masse ist ein Kondensator C1 zwischengeschaltet.

Von dem oben beschriebenen Teil der Steuereinheit 8 wird die das Freigabesignal erzeugende Einheit 14 gebildet.

Der Ausgang des Operationsverstärkers IC4/2 ist über die Negatoreinheit IC2/6 an den einen Eingang des Operationsverstärkers IC3/2 angeschlossen, dessen ande rer Eingang dem Empfangen des vom Gangwählschalter 13 ankommenden Signals dient, und zwar wie folgt:

Von den Klemmen I., II., D und R des Gangwählschalter 13 ist je eine Ausleitung an den Eingängen 19, 20, 21, 22 der Steuereinheit angeschlossen. Hier soll bemerkt werden, daß von diesen Klemmen auch weitere Ausleitungen ausgehen, denn die Steuerung des Schaltens der Gangstufen erfolgt in einer anderen Steuereinheit. Eben deshalb soll die Steuereinheit 8 die Absicht des Fahrzeugfahrers nur aus dem Gesichtspunkt bewerten, ob er anfahren will und ob vorwärts oder rückwärts. Dementsprechend sind die an dem Klemmen I., II. und D angeschlossenen Eingänge 19, 20 und 21 über die Dioden D3, D4 und D5 in einem gemeinsamen Vorwärtsanschlußpunkt 24 miteinander verbunden.

Der Vorwärtsanschlußpunkt 24 ist über die Diode D1, und der an der Klemme R angeschlossene Eingang 22 über die Diode D2 am anderen Eingang des Operationsverstärkers IC3/2 angeschlossen. Der gemeinsame Punkt des Vorwärtsanschlußpunktes 24 und der Diode D1 ist über einen Widerstand R10, der gemeinsame Punkt des Eingangs 22 und der Diode D2 über einen Widerstand R11, und der gemeinsame Punkt der Ausgänge der Dioden D1 und D2 über einen Widerstand R9 geerdet.

Der Ausgang des Operationsverstärkers IC3/2 ist am Dateneingang des Flip-Flop IC5 angeschlossen. Am Lösch- und Taktsignaleingang des Flip-Flop IC5 ist der mit dem Gaspedalgrundstellungssignalgeber 11 in Verbindung stehende Verzweigungspunkt 23 angeschlossen.

Der Ausgang des Flip-Flop IC5 ist am Preset-Eingang des Flip-Flop IC6 angeschlossen. Am Löscheingang des Flip-Flop IC6 ist über die Negatoreinheit IC2/5 der Ausgang des Operationsverstärkers IC3/1, und an dessen Eingängen der Ausgang der Negatoreinheiten IC2/2 bzw. IC2/4 angeschlossen.

Der Ausgang des Flip-Flop IC6 ist an je einem Eingang der Operationsverstärker IC3/3 und IC3/4 angeschlossen. Am anderen Eingang des Operationsverstärkers IC3/3 ist der Vorwärtsanschlußpunkt 24, und am anderen Eingang des Operationsverstärkers IC3/4 der mit der Klemme R verbundene Eingang 22 angeschlossen.

Der oben beschriebene Teil der Steuereinheit 8 ist die das Schaltsignal erzeugende Einheit 15.

Prinzipiell würden die Ausgänge der Operationsverstärker IC3/3 und IC3/4 den Ausgang der Steuereinheit 8 bilden.

Der Ausgang des Operationsverstärkers IC3/3 ist aber an einen Eingang eines weiteren Operationsverstärkers IC7 angeschlossen. An dessen anderen Eingang ist der das Signal des Radwinkelgeschwindigkeitssignalgebers 12 empfangende Eingang 18 der Steuereinheit 8 angeschlossen, und zwar wie folgt.

An dem Eingang 18 ist einer der Eingänge des Operationsverstärkers IC1/1 angeschlossen, dessen anderer Eingang über den aus Widerständen R1-R2 bestehenden Spannungsteiler am positiven Pol der Speisespannungsquelle angeschlossen ist. Der Ausgang des Operationsverstärkers IC1/1 ist über die Negatoreinheit IC2/1 an den einen Eingang des Operationsverstärkers IC4/1 angeschlossen, dessen beiden anderen Eingänge mit dem Ausgang der Negatoreinheit IC2/4 bzw. dem positiven Pol der Speisespannungsquelle verbunden sind und dessen Ausgang mit dem Eingang des Operationsverstärkers IC7 verbunden ist. In dieser Weise werden der Ausgang 25 der Steuereinheit 8 von dem Ausgang des Operationsverstärkers IC7, und der Ausgang 26 der Steuereinheit 8 von dem Ausgang des Operationsverstärkers IC3/4 gebildet. Von den elektromagnetischen Ventilen 7 des automatischen Wechselgetriebes 2 ist das die I. Gangstufe schaltende Ventil mit dem einen Pol seines Elektromagneten an den Ausgang 25 angeschlossen und der Ausgang 26 ist an dem einen Pol des Elektromagneten des die Rückwärtsgangstufe schaltenden Ventils angeschlossen. Am anderen Pol dieser Elektromagneten sind die entsprechenden Ausgänge der hier nicht dargestellten, das Stufenschalten steuernden Einheit angeschlossen.

Mit der oben beschriebenen Einrichtung kann das erfindungsgemäße Verfahren wie folgt durchgeführt werden:

Der Fahrzeugfahrer startet das Kraftfahrzeug mit denselben Operationen wie ein mit einem anderen automatischen Wechselgetriebe ausgestattetes Kraftfahrzeug. Dies bedeutet, daß er erst den Motor 1 anläßt, dann mit Hilfe des Gangwählschalters 13 entsprechend der geplanten Bewegungsrichtung (vorwärts-rückwärts) und der Verkehrsverhältnisse (Straßenverhältnisse, Verkehr, Belastung, Steigung usw.) in dem entsprechenden Gangstufenschaltprogramm (von der I. Gangstufe aus höhere Gangstufen verboten usw.) einen Befehl gibt und dann mit dem Gaspedal 10 Gas gibt.

Die erfindungsgemäße Einrichtung bewertet die Tätigkeiten des Fahrzeugfahrers wie folgt.

Vor dem Anlassen bzw. nach dem Anlassen bis zum Erreichen der Leerlaufdrehzahl ist der Signalpegel des Motorwinkelgeschwindigkeitssignalgebers 9 für die Steuereinheit nicht genügend hoch, also es besteht für diese kein Signal.

In ähnlicher Weise ist auch der Signalpegel des die Bewegung des Kraftfahrzeuges wahrnehmenden Radwinkelgeschwindigkeitssignalgebers 12 derart bestimmt, daß die Steuereinheit 9 das im stehenden oder quasi stehenden Zustand des Kraftfahrzeuges erzeugte Signal derart bewertet, daß kein Signal besteht (bei einem Teil der mit automatischem Wechselgetriebe ausgestatteten Kraftfahrzeuge schaltet das automatische Wechselgetriebe beim Stehenbleiben des Fahrzeugs aus Verkehrsgründen in die Anlaßstufe zurück; wegen der Gaspedalgrundstellung läuft der Motor mit Leerlaufdrehzahl; hierbei ist ein geringes Abtriebsmoment des hydraulischen Drehmomentwandlers vorhanden, wodurch das Kraftfahrzeug langsam anfahren kann; dies pflegen die Fahrzeugfahrer einfach durch Betätigen der Bremsen auszugleichen). Der quasi stehende Zustand wurde auf eine Geschwindigkeit von 1,5 km/h begrenzt.

Schließlich ist das Gaspedal 10 in Grundstellung, so daß auch der Gaspedalstellungssignalgeber 11 ein dementsprechendes Signal erzeugt. Die Steuereinheit 8 bewertet dies ebenfalls so, daß kein Signal besteht.

Hier muß eine grundsätzlich Frage erklärt werden. Aus dem Gesichtspunkt des erfindungsgemäßen Verfahrens und der erfindungsgemäßen Einrichtung hat die Größe der von den Signalgebern kommenden tatsächlichen Signale keine Bedeutung; es kommt vielmehr nur darauf an, ob diese Signale einen bestimmten Signalpegel erreichen oder nicht. In breiterem Sinne erzeugen die Signalgeber also immer ein Signal (also zum Beispiel auch bei Null-Drehzahl), das für die Steuereinheit 8 als 0 oder 1 gewertet wird. Diese Interpretation mußte vorausgeschickt werden, wenngleich sie bei aus Elementen aufgebauten Steuereinheiten selbstverständlich ist, aber mit dieser Interpretation kann jedwelche Steuereinheit derart aufgebaut werden, daß sie das erfindungsgemäße Verfahren durchführen kann.

Aufgrund der an den Eingängen 16, 17, 18 ankommenden Signale erzeugt also der Ausgang des Operationsverstärkers IC4/2 der Freigabesignal erzeugenden Einheit 14 kein Freigabesignal. Um am Ausgang ein Freigabesignal zu erzeugen, soll der Motor 1 mit Leerlaufdrehzahl laufen. Diese Bedingung ist nach dem Anlassen des Motors erfüllt, was durch die entsprechende Änderung des Signalpegels des Motorwinkelgeschwindigkeitssignalgebers 9 signalisiert wird.

Da das Kraftfahrzeug steht, der Motor 1 mit Leerlaufdrehzahl läuft und das Gaspedal 10 sich in der Grundstellung befindet, sind die Bedingungen des sicherheitsvollen Anfahrens des Kraftfahrzeuges erfüllt; daher erscheint am Ausgang des Operationsverstärkers IC4/2 das Freigabesignal E, das der das Schaltsignal erzeugenden Einheit 15 zugeführt wird.

Abhängig vom Fahrstil des Fahrzeugfahrers hat die das Schaltsignal erzeugende Einheit 15 das Steuersignal V von irgendeiner der Klemmen I., II., D, R des Gangwählschalters 13 erhalten oder soll es jetzt erhalten. Das Auswählen der entsprechenden Klemme wurde oben bereits beschrieben. Hier soll bemerkt werden, daß das vom Gangwählschalter 13 ankommende Signal in der unserseits tatsächlich verwirklichten Einrichtung in zweierlei Weise eine Rolle spielt. Das Steuersignal V signalisiert, daß Wählen erfolgt ist, deshalb wird das an irgendeinem der Eingänge 19-22 ankommende Signal hinter den Dioden D1-D2 in gleicher Weise bewertet, jedoch hinter den Operationsverstärkern IC3/3 und IC3/4 bereits als Vorwärtsgang- oder Rückwärtsgangsignal.

Wenn der Fahrzeugfahrer will, daß das Kraftfahrzeug tatsächlich anfährt, drückt er das Gaspedal 10. Dadurch ändert sich das Signal des Gaspedalstellungssignalgebers 11, wodurch sich das Befehlssignal P zum Einschalten der Anfahrgangstufe ergibt. Damit durch die Veränderung des Signals des Gaspedalstellungssignalgebers 11 das am Ausgang des Operationsverstärkers IC4/2 anstehende Freigabesignal nicht gelöscht wird, wird dies von dem Kondensator C1 verzögert. Zugleich wird die Anwesenheit des Freigabesignals E und des Steuersignals V in dem Flip-Flop IC5 solange gespeichert, solange das Befehlssignal P nicht erlischt, d. h. solange der Fahrzeugfahrer Gas gibt. Da es aber oft vorkommt, daß der Fahrzeugfahrer das Gaspedal nicht zum Anhalten des Fahrzeugs, sondern nur zwecks Verlangsamung desselben in die Grundstellung zurückstellt, wird aus dem Grund, daß die Einrichtung die Bedingungen des sicherheitsvollen Anfahrens nicht widerholt prüfen muß, das am Ausgang des Flip-Flop IC5 erzeugte Signal von dem Flip-Flop IC6 solange gespeichert, solange das Kraftfahrzeug tatsächlich nicht anhält.

Nach dem vom Flip-Flop IC6 austretenden Signal und dem vom Gangwählschalter 13 ankommenden entsprechenden Signal wird von dem Operationsverstärker IC3/3 das Vorwärtsschaltsignal KI oder von dem Operationsverstärker IC3/4 das Rückwärtsschaltsignal KR erzeugt. Das Vorwärtsschaltsignal KI - bei Erfüllung einer weiteren Bedingung - oder däs Rückwärtsschaltsignal KR setzt den entsprechenden Elektromagneten der elektromagnetischen Ventile 7 unter Spannung; dadurch wird die I. oder die Rückwärtsgangstufe eingeschaltet und mit zunehmendem Gasgeben erhöht sich die Drehzahl des Motors 1, wodurch der hydrodynamische Drehmomentwandler dem automatischen Wechselgetriebe 2 ein entsprechend größeres Moment übergibt.

Die im Zusammenhang mit dem Vorwärtsschaltsignal KI erwähnte weitere Bedingung ist wie folgt.

Es wurde bereits erwähnt, daß wenn das Kraftfahrzeug aus Verkehrsgründen anhält, das automatische Wechselgetriebe 2 nur bis zur Anfahrstufe zurückschaltet und nicht in den Leergang. Der Fahrzeugfahrer gleicht die aus diesem Grund entstandene Schleppbewegung durch Bremsen aus, statt daß er den Gangwählschalter 13 in den Leergang-Schaltzustand N schaltet. Hierdurch werden Kraftstoffverluste verursacht.

Der energiesparende Betrieb wurde erfindungsgemäß in folgender Weise gelöst:

Wenn der Fahrzeugfahrer das Gaspedal 10 in die Grundstellung stellt und die Geschwindigkeit des Kraftfahrzeugs unter die untere Grenze gelangt (diese Grenze wurde zu 3 km/h gewählt), wird von dem vom Operationsverstärker IC4/1 ankommenden Signal das Vorwärtsschaltsignal KI im Operationsverstärker IC6 verboten. Dadurch wird jede Gangstufe des automatischen Wechselgetriebes 2 ausgeschaltet. Aufgrund eines neuen Signals des Gaspedalstellungssignalgebers 11 wird das Verbot am Operationsverstärker IC7 aufgehoben. Die vorangehend erwähnte Bedingung ist also, daß vom Operationsverstärker IC4/1 kein Verbotssignal ankommt.

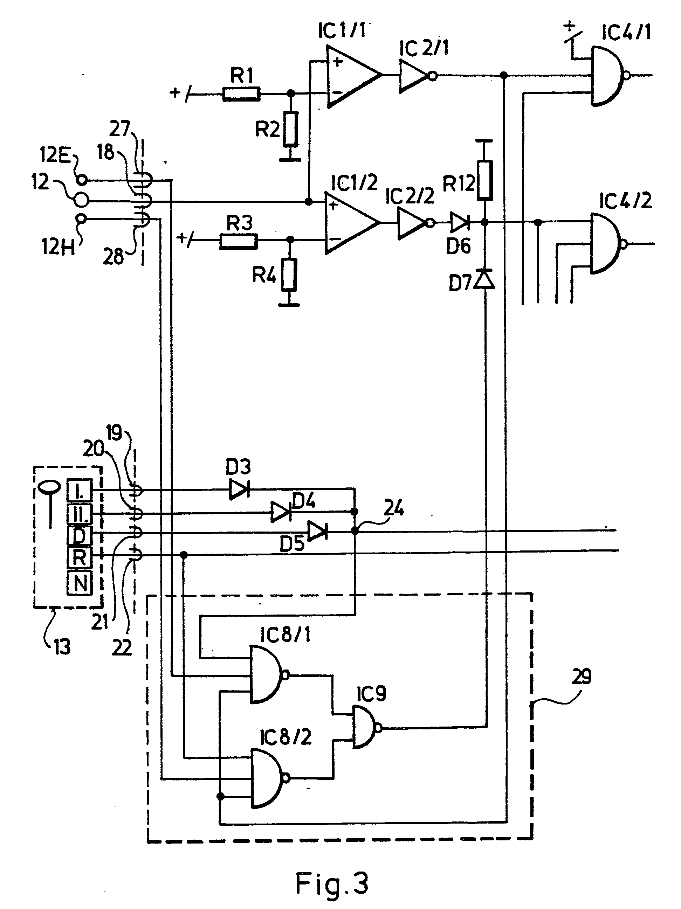

Eine bevorzugte Ausführungsform des erfindungsgemäßen Verfahrens und die dazu ausgebildete Variante der erfindungsgemäßen Einrichtung sind aus Figur 3 ersichtlich.

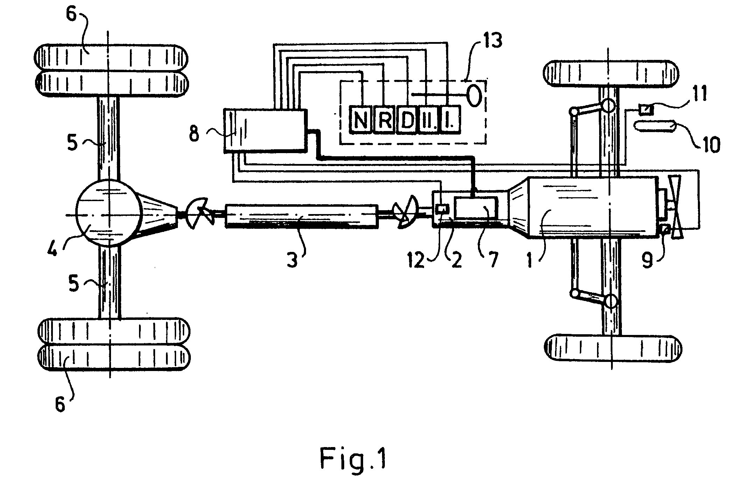

Für diese Ausführungsform sind dieselben Signalquellen und elektronischen Einheiten erforderlich wie bei der vorangehend beschriebenen Ausführungsform; so ist ihre Anordnung derjenigen nach Figur 1 und im dazu gehörenden Beschreibungsteil entsprechend dargestellt.

Die einzige Abweichung besteht in der Ausbildung des Radwinkelgeschwindigkeitssignalgebers 12. Hier ist der Radwinkelgeschwindigkeitssignalgeber 12 mit einem Vorwärtsrichtungsfühler 12E und einem Rückwärtsrichtungsfühler 12H versehen, welche an die Eingänge 27 bzw. 28 der Steuereinheit 8 angeschlossen sind. Diese geben Information über den Bewegungszustand, d.h. über die Bewegungsrichtung des Kraftfahrzeugs.

Auch in der Steuereinheit 8 bestehen geringe Veränderungen. Diese sind in Figur 3 derart dargestellt, daß hier nur die veränderten Teile der in Figur 2 dargestellten Einrichtung enthalten sind.

Bei dieser Variante wurden für die Steuereinheit 8 weitere elektronische Elemente verwendet; diese sind: das die Operationsverstärker IC8/1 - IC8/2 enthaltende NAND-Tor SN 74 LS 10 mit zweimal drei Eingängen, ein NAND-Tor SN 74 LS 00 mit viermal zwei Eingängen, von dem nur ein Operationsverstärker IC9 gebraucht wird, und die Dioden D6-D7 1N 4148 und ein Widerstand R12.

Die Schaltung mit den neuen Elementen ist wie folgt.

Der mit dem Vorwärtsrichtungsfühler 12E in Verbindung stehende Eingang 27 ist an den einen Eingang des Operationsverstärkers IC8/1 angeschlossen. An den zweiten Eingang des Operationsverstärkers IC8/1 ist der Vorwärtsanschlußpunkt 24, und an den dritten Eingang der Ausgang der Negatoreinheit IC2/1 angeschlossen. Der Ausgang des Operationsverstärkers IC8/1 ist an den einen Eingang des Operationsverstärkers IC9 angeschlossen.

An dem mit dem Rückwärtsrichtungsfühler 12H in Verbindung stehenden Eingang 28 ist der eine Eingang des Operationsverstärkers IC8/2 angeschlossen. An den zweiten Eingang des Operationsverstärkers IC8/2 ist der Eingang 22, und an den dritten Eingang der Ausgang der Negatoreinheit IC2/1 angeschlossen. Der Ausgang des Operationsverstärkers IC8/2 ist an den anderen Eingang des Operationsverstärkers IC9 angeschlossen.

Der oben beschriebene, aus den Operationsverstärkern IC8/1, IC8/2 und IC9 bestehende Teil ist die den Bewegungszustand wahrnehmende Einheit 29, deren Ausgang mit dem Ausgang des Operationsverstärkers IC9 identisch ist.

Die andere Veränderung der Steuereinheit 8 besteht bei der das Freigabesignal erzeugenden Einheit 14. An den Ausgang der Negatoreinheit IC2/2 ist eine Diode D6 angeschlossen und die Negatoreinheit IC2/2 ist über diese Diode D6 an den ersten Eingang des Operationsverstärkers IC4/2 angeschlossen.

An den Ausgang der Diode D6 sind über eine andere Diode D7 der Ausgang des Operationsverstärkers IC9 und ein Widerstand R 12 angeschlossen, dessen anderer Pol an Masse liegt.

Mit der oben beschriebenen erfindungsgemäßen Einrichtung kann das folgende erfindungsgemäße Verfahren durchgeführt werden.

Während des vorher beschriebenen Verfahrens wurde als eine Bedingung des sicherheitsvollen Anfahrens vorausgesetzt, daß das Kraftfahrzeug steht oder höchstens ziemlich langsam, mit einer unsererseits zu 1, 5 km/h gewählten Geschwindigkeit fährt. Es gibt aber derartige Verkehrssituationen, bei denen diese Bedingung eine überflüssige Gebundenheit ist. So zum Beispiel, wenn der Fahrzeugfahrer das auf einem Gefälle stehende Kraftfahrzeug derart anfahren will, daß er es erst frei rollenläßt, und die Operationen des tatsächlichen Anfahrens erst durchführt, wenn das Kraftfahrzeug schon in Bewegung ist. In ähnlicher Weise kann das Kraftfahrzeug auf einer Steigung rückwärts rollend angefahren werden. Wenn also gewährleistet wird, daß nur diejenige Anfahrgangstufe (I. Gangstufe oder Rückwärtsgangstufe) eingeschaltet werden kann, welche einen zu dem tatsächlichen Bewegungszustand des Kraftfahrzeuges identischen Antrieb erzeugen würde, kann die vorangehend erwähnte Bedingung durch eine andere ersetzt werden.

Wenn sich das Kraftfahrzeug aus dem oben erwähnten Grund bewegt, würde das vom Radwinkelgeschwindigkeitssignalgeber 12 ankommende Signal verhindern, daß am Ausgang des Operationsverstärkers IC4/2 ein Signal erscheint, d.h. es gäbe kein Freigabesignal.

Wenn sich das Kraftfahrzeug vorwärtsbewegt, erzeugt der Vorwärtsrichtungsfühler 12E, und wenn es sich rückwärtsbewegt, erzeugt der Rückwärtsrichtungsfühler 12H ein Signal.

Die den Bewegungszustand bewertende Einheit 29 vergleicht diese Signal mit dem vom Gangwählschalter 13 ankommenden Signalen, d.h. sie überprüft, ob die vom Fahrzeugfahrer einzuschalten gewünschte Anfahrstufe mit der tatsächlichen Bewegungsrichtung des Kraftfahrzeuges übereinstimmt.

Wenn also das Kraftfahrzeug vorwärtsrollt und der Fahrzeugfahrer durch Schalten der Klemmen I., II. oder D einen Befehl zum Einschalten der Vorwärtsanfahrstufe gibt, kommt vom Ausgang des Operationsverstärkers IC9 ein derartiges Signal am Eingang des Operationsverstärkers IC4/2 an, das die entsprechende Bedingung des Radwinkelgeschwindigkeitssignalgebers 12 ersetzt. In dieser Weise kommt an jedem Eingang des Operationsverstärkers IC4/2 das entsprechende Signal an und an dessen Ausgang erscheint das Freigabesignal.

Beim Rollen des Kraftfahrzeuges rückwärts oder bei Schalten der Klemme R ersetzt die den Bewegungszustand bewertende Einheit 29 das entsprechende Signal des Radwinkelgeschwindigkeitssignalgebers 12 in derselben Weise.

Bei der oben beschriebenen Einrichtung wurde eine derartige Ausführungsform des Radwinkelgeschwindigkeitssignalgebers verwendet, bei dem die Vorwärts- und Rückwärtsbewegung des Fahrzeugs von jeweils einem ein diskretes Signal erzeugenden Signalgeber wahrgenommen wurde. Der Richtungsfühler kann selbstverständlich auch derart ausgebildet werden, daß ein einziges Gerät ein einziges Signal erzeugt, und die Veränderung des Signals die verschiedenen Bewegungsrichtungen ausdrückt. Schließlich kann die Ausbildung auch so vorgenommen werden, daß die Bewegungsrichtungen durch die Vorzeichenänderung des analogen Signals des Radwinkelgeschwindigkeitssignalgebers ausgedrückt wird.

Seit kurzem ist eine starke Tendenz vorhanden, die Autobusse mit einem Anti-blockier-Bremssystem zu versehen. An dem Rad derartiger Kraftfahrzeuge ist ein Umdrehungszähler von vornerein eingebaut. Dieser Umdrehungszähler kann bei dem erfindungsgemäßen Verfahren ebenfalls als Radwinkelgeschwindigkeitssignalgeber verwendet werden. Mit Rücksicht darauf, daß eine Abweichung zwischen den Winkelgeschwindigkeiten der Räder an den beiden Seiten des Kraftfahrzeugs aus dem Gesichtspunkt des erfindungsgemäßen Verfahrens heraus vernachlässigbar ist (max. 25% in Abhängigkeit vom Radius des Drehkreises), genügt es das Signal nur des einen Umdrehungszählers zu verwenden. Selbstverständlich gibt die Bildung des Durchschnitts der an beiden Seiten meßbaren Winkelgeschwindigkeiten eine genauere Grundinformation. Übrigens können auch diese Signalgeber derart ausgebildet werden, daß sie auch über die Bewegungsrichtung informieren.

Das erfindungsgemäße Verfahren gewährleistet nicht nur Schutz gegen Fehler oder einen kraftstoffverschwendenden Fahrstil des Fahrzeugfahrers, sondern auch gegen bestimmte technische Fehler (z. B. Einklemmen des Gasgestänges).

## Ansprüche

1. Verfahren zum sicherheitsvollen Anfahren von Kraftfahrzeugen, die eine aus einem Verbrennungsmotor (1), einem elektohydraulisch gesteuerten hydromechanischen automatischen Wechselgetriebe (2), einem Differentialwerk (4), mindestens einem Paar Halbwellen (5) und einem Paar Räder (6), gegebenenfalls auch einer das automatische Wechselgetriebe (2) mit dem Differentialwerk (4) verbindenden Kardanwell (3) bestehende Antriebskette, ein den Motor (1) mit Kraftstoff versorgendes Kraftstoffzuführsystem mit einem dieses regelnden Gaspedal (10), und einen die Gangstufenschaltprogramme des automatischen Wechselgetriebes (2) auswählenden Gaswählschalter (13) aufweisen, dadurch gekennzeichnet, daß mit Hilfe eines Radwinkelgeschwindigkeitssignalgebers (12) aus der Winkelgeschwindigkeit irgendeines Konstruktionsteils oder Teilpaares des mit der Antriebswelle des automatischen Wechselgetriebes (2) beginnenden und mit dem Rad (6) endenden Teils der Antriebskette bei einer Raddrehzahl von Null oder praktisch Null, mit Hilfe eines Motorwinkelgeschwindigkeitssignalgebers (9) aus der Winkelgeschwindigkeit der Hauptwelle des Motors (1) bei Leerlaufdrehzahl, und mit Hilfe eines Gaspedalstellungssignalgebers (11) aus der Stellung des Gaspedals (10) in dessen Grundstellung je ein elektrisches Signal gebildet wird und durch die gemeinsame Anwesenheit dieser Signale in einer Steuereinheit (8) ein Freigabesignal (E) und mit Hilfe des Gangwählschalters (13) ein das Vorwärts- oder Rückwärtsgangschalten des automatischen Wechselgetriebes (2) steuerndes Signal (V) gebildet werden, dann bei gemeinsamer Anwesenheit des Steuersignals (V) und des Freigabesignals (E) mit der Bewegung des Gaspedals (10) aus dessen Grundstellung heraus ein Befehlssignal (P) erzeugt wird und mit dem Freigabesignal (E), dem Steuersignal (V) und dem Befehlssignal (P) ein Schaltsignal (Kl, KR) gebildet wird, mit dem die die gewünschte Gangstufe des automatischen Wechselgetriebes (2) schaltenden elektromagnetischen Ventile (7) in die Schaltlage gesteuert werden.

2. Verfahren nach Anspruch 1, dadurch gekennzeichnet, daß mit dem Radwinkelgeschwindigkeitssignalgeber (12) ein auch für die Bewegungsrichtung des Kraftfahrzeuges charakteristisches Signal erzeugt wird, mit dem in der Steuereinheit (8) die Bewegungsrichtung des Kraftfahrzeuges mit der Anfahrrichtung, die von dem vom Gangwählschalter (13) erzeugten Steuersignal (V) repräsentiert wird, verglichen wird, und daß das die Raddrehzahl Null oder praktisch angebende Signal des Radwinkelgeschwindigkeitssignalgebers (12) durch das die Übereinstimmung der Bewegungsrichtung und der vorgewählten Anfahrrichtung angebende Signal ersetzt wird.

3. Verfahren nach Anspruch 1 oder 2, dadurch gekennzeichnet, daß durch ein gleichzeitiges Vorliegen des in der Grundstellung des Gaspedals (10) erzeugten Signals des Gaspedalstellungssignalgebers (11) und des die langsame Bewegung des Kraftfahrzeuges unterhalb eines bestimmten niedrigen Geschwindigkeitswertes ausdrückenden Signals des Radwinkelgeschwindigkeitssignalgebers (12) das Schaltsignal verboten wird und die eingeschaltete Gangstufe des automatischen Wechselgetriebes ausgeschaltet (in Leergang geschaltet) wird, dann gegebenenfalls durch Bewegen des Gaspedals (10) aus seiner Grundstellung das Verbot des Schaltsignals gelöscht und mit dem Schaltsignal die die gewünschte Gangstufe des automatischen Wechselgetriebes (2) schaltenden elektromagnetischen Ventile (7) in die Schaltlage gesteuert werden.

4. Einrichtung zum sicherheitsvollen Anfahren von Kraftfahrzeugen, die eine aus einem Verbrennungsmotor (1), einem elektrohydraulisch gesteuerten hydromechanischen automatischen Wechselgetriebe (2), einem Differentialwerk (4), mindestens einem Paar Halbwellen (5) und einem Paar Räder (6), gegebenenfalls auch einer das automatische Wechselgetriebe (2) mit dem Differentialwerk (4) verbindenden Kardanwell (3) bestehende Antriebskette, ein den Motor (1) mit Kraftstoff versorgendes Kraftstoffzuführsystem und ein dieses regelndes Gaspedal (10) und einen die Gangstufenschaltungsvarianten des automatischen Wechselgetriebes auswählenden Gangwählschalter (13) aufweisen, dadurch gekennzeichnet, daß irgendein Konstruktionsteil oder Teilpaar des mit der Antriebswelle des automatischen Wechselgetriebes (2) beginnenden und mit dem Rad (6) endenden Teils der Antriebskette mit einem Radwinkelgeschwindigkeitssignalgeber (12) gekoppelt ist, die Hauptwelle des Motors (1) oder ein mit der Hauptwelle in konstanter Übersetzung gekuppeltes Bauteil mit einem Motorwinkelgeschwindigkeitssignalgeber (9) gekoppelt ist und das Gaspedal (10) mit einem Gaspedalstellungssignalgeber (11) gekoppelt ist, wobei der Radwinkelgeschwindigkeitssignalgeber (12), der Motorwinkelgeschwindigkeitssignalgeber (9), der Gaspedalstellungssignalgeber (11) und die Klemmen des Gangwählschalters (13) an die Eingänge (16 - 22) einer Steuereinheit (8) angeschlossen sind, die Steuereinheit (8) eine das Signal des Radwinkelgeschwindigkeitssignalgebers (12), des Motorwinkelgeschwindigkeitssignalgebers (9) und des Gaspedalstellungssignalgebers (11) bewertende, ein Freigabesignal erzeugende Einheit (14) und eine das Freigabesignal (E), das Steuersignal (V) des Gangwählschalters (13) und das Befehlssignal (P) des Gaspedalstellungssignalgebers (11) bewertende, ein Schaltsignal erzeugende Einheit (15) aufweist und an den Ausgang (25, 26) der Steuereinheit (8) die Elektromagnete der elektromagnetischen Ventile (7) des automatischen Wechselgetriebes (2) angeschlossen sind.

5. Einrichtung nach Anspruch 4, dadurch gekennzeichnet, daß der Radwinkelgeschwindigkeitssignalgeber (12) mit wenigstens einem die Bewegungsrichtungen des Kraftfahrzeuges wahrnehmenden Richtungsfühler (12E, 12H) versehen ist, der an Eingänge (27, 28) der Steuereinheit (8) angeschlossen ist, und daß die Steuereinheit (8) eine die Signale des Richtungsfühlers (12E, 12H) und des Gangwählschalters (13) auswertende, den Bewegungszustand bewertende Einheit (29) aufweist, deren Ausgang an die das Freigabesignal erzeugende Einheit (14) parallel zu dem Radwinkelgeschwindigkeitssignalgeber (12) angeschlossen ist.

6. Einrichtung nach Anspruch 4 oder 5, dadurch gekennzeichnet, daß der Radwinkelgeschwindigkeitssignalgeber (12) und der Motorwinkelgeschwindigkeitssignalgeber (9) Frequenzgeber sind und an der Steuerwelle des Motors (1) bzw. an der Antriebswelle des automatischen Wechselgetriebes (2) eingebaut sind.

Fig.1

EP 0 324 878 A1

Fig.2

Fig.3

Europäisches Patentamt

**EUROPÄISCHER RECHERCHENBERICHT**

Nummer der Anmeldung

EP 88 10 0809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 046 032 (BRAUN et al.)<br>* Spalte 1, Zeilen 8-15; Spalte 3, Zeilen 20-33; Spalte 4, Zeilen 8-52; Spalte 5, Zeilen 12-35; Spalte 6, Zeilen 10-35; Spalte 7, Zeilen 30-37; Figur 2 *<br>--- | 1,3,4 | B 60 K 41/06 |
| A | US-A-4 475 637 (OGUMA et al.)<br>* Spalte 1, Zeilen 5-9; Spalte 3, Zeilen 23-58; Spalte 4, Zeile 60 – Spalte 5, Zeile 29; Figuren 1,2,3b *<br>--- | 1,2,4-6 | |
| A | EP-A-0 189 050 (VDO ADOLF SCHINDLING)<br>* Seite 5, Zeilen 23-30; Seite 8, Zeilen 5-20; Seite 11, Zeile 20 – Seite 12, Zeile 24; Seite 14, Zeilen 18-30; Seite 16, Zeile 33 – Seite 17, Zeile 14; Figur 1 *<br>--- | 1,4,6 | |
| A | US-A-4 499 793 (JOW et al.)<br>* Spalte 1, Zeilen 29-48; Spalte 2, Zeilen 33-52; Spalte 3, Zeilen 31-40; Spalte 7, Zeilen 51-62; Spalte 9, Zeile 11 – Spalte 10, Zeile 47; Spalte 12, Zeilen 51-54; Figuren 1,2 *<br>--- | 1,3,4,6 | **RECHERCHIERTE SACHGEBIETE (Int. Cl.4)**<br><br>B 60 K |
| A | DE-A-3 325 002 (HONDA)<br>* Seite 4, Zeilen 21-29; Seite 6, Zeilen 23-26; Seite 11, Zeile 34 – Seite 12, Zeile 26; Seite 13, Zeile 5 – Seite 14, Zeile 4; Figuren 1,6 * &<br>GB-A-2 126 291 (Cat. D)<br>----- | 1,3,4,6 | |

Der vorliegende Recherchenbericht wurde für alle Patentansprüche erstellt

| Recherchenort | Abschlußdatum der Recherche | Prüfer |
|---|---|---|
| DEN HAAG | 19-09-1988 | CLASEN M.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)